# EUROPÄISCHE PATENTSCHRIFT

(11) **EP 3 074 607 B1**
(45) Veröffentlichungstag und Bekanntmachung des Hinweises auf die Patenterteilung: **06.11.2019**
(21) Anmeldenummer: 14808814.9
(22) Anmeldetag: 14.11.2014
(51) Int. Cl.: F01D 5/26, F04D 29/32, F01D 5/14, F04D 29/66

(54) **VERDICHTER**
COMPRESSOR
COMPRESSEUR

(30) Priorität: 26.11.2013 DE 102013224081
(43) Veröffentlichungstag der Anmeldung: 05.10.2016
(73) Patentinhaber: MAN Energy Solutions SE, 86153 Augsburg (DE)
(72) Erfinder: PASSRUCKER, Harald, A-5023 Salzburg (AT); BREITSCHWERDT, Klaus, 82223 Eichenau (DE); GRÜBER, Björn, 82223 Eichenau (DE); PÖHLER, Thorsten, 46539 Dinslaken (DE)
(74) Vertreter: Marschall, Stefan
(86) Internationale Anmeldenummer: PCT/DE2014/000582
(87) Internationale Veröffentlichungsnummer: WO 2015/078428

(56) Entgegenhaltungen:
- DE-A1-102011 054 550

## Beschreibung

Die Erfindung betrifft einen Verdichter beispielsweise einer Strömungsmaschine. Die Druckschrift DE 103 26 533 A1 offenbart einen Verdichter aus dem Stand der Technik.

Es wird angemerkt, dass der Verdichter auch als Kompressor bezeichnet wird. Einerseits kann ein solcher Verdichter in Verbindung mit einer Brennkammer und einer Turbine beispielsweise in einer Gasturbine verbaut werden. Andererseits kann ein solcher Verdichter aber auch als eigenständiges Modul gebaut werden, um von einer eigenständigen Maschine angetrieben zu werden.

Bei der Rotation eines beschaufelten Rotors gegenüber einem feststehenden Stator, insbesondere einem feststehenden Gehäuse oder feststehenden Leitschaufeln, werden die feststehenden Baugruppen durch die Bewegung des Rotors und die Schaufeln des Rotors durch die feststehenden Baugruppen zu Schwingungen angeregt. Schwingungen innerhalb der Strömungsmaschine, insbesondere einer Gasturbine bzw. eines Flugzeugtriebwerkes, sind jedoch von Nachteil, da in Folge von Schwingungen Baugruppen der Gasturbine einer höheren Belastung und damit einem erhöhtem Verschleiß ausgesetzt sind. Insbesondere müssen Resonanzschwingungen vermieden werden.

In dem oben aufgeführten Stand der Technik weisen die Schaufeln eines Rotors einen unterschiedlichen Abstand (Abstand der Schaufel-Teilung) auf. Leider ist diese Lösung für Repetierstufen nicht geeignet, da bei dieser Lösung die Resonanzschwingung zwischen den Stufen nicht berücksichtigt wird. Repetierstufen sind Verdichterstufen, deren Schaufelblätter identisch und hintereinander angeordnet sind. In der Fachwelt spricht man von "geclockten" Stufen. Typischerweise weisen die verschiedenen Stufen die gleiche Teilung auf. Allgemein bedeutet dies, dass die Anregungsordnung der Zuströmung und der Abströmung jeder Repetierstufe identisch ist.

Die Druckschrift DE 10 2011 054 550 A1 offenbart eine Rotationsmaschine mit Nuten zur Steuerung der Fluiddynamik. Die Schaufeln können dabei einen ungleichmäßigen Teilungsabstand aufweisen. Damit soll die Entstehung von Wirbelschleppen und Kopfwellen reduziert werden.

Der vorliegenden Erfindung liegt die Aufgabe zu Grunde, eine Lösung anzugeben, die Schaufelschwingungen, insbesondere auch bei Repetierstufen eines Verdichters, vermeidet.

Die Aufgabe wird durch die Merkmale des Anspruchs 1 gelöst.

Die Erfindung betrifft einen Verdichter insbesondere einer Strömungsmaschine. Dieser Verdichter umfasst mindestens einen Schaufelring, mindestens zwei Ringsegmente, wobei der Schaufelring in mindestens zwei, insbesondere gleich große, Ringsegmente eingeteilt ist. Ferner umfasst der Verdichter Schaufeln, die derart in den Ringsegmenten des Schaufelrings angeordnet sind, dass eine erste Anzahl an Schaufeln in einem ersten Ringsegment angeordnet sind und eine zweite Anzahl an Schaufeln in einem zweiten Ringsegment angeordnet sind. Dabei ist die erste Anzahl an Schaufeln ungleich zur zweiten Anzahl an Schaufeln. Segmente in Laufschaufelringen können vorzugsweise paarweise auftreten.

Der Verdichter umfasst zudem einen weiteren Schaufelring einer weiteren Verdichterstufe mit mindestens zwei weiteren Ringsegmenten, die weitere Schaufeln aufweisen. Dabei weist das zweite weitere Ringsegment die erste Anzahl an weiteren Schaufeln und das erste weitere Ringsegment die zweite Anzahl an weiteren Schaufeln auf. Dies ist insbesondere vorteilhaft, da über die Gitter hinweg mindestens eine weitere Phasenverschiebung der Strömung am Umfang eingebracht werden kann.

Der Schaufelring und der weitere Schaufelring sind zueinander verdrehgesichert, weisen eine um 180° verdrehte Konfiguration auf und sind so zueinander umgekehrt gestaltet.

In einer weiteren vorteilhaften Ausgestaltung der Erfindung umfasst der Verdichter mindestens zwei Stufen, wobei jede Stufe einen Laufschaufelring und einen Leitschaufelring aufweist.

In einer weiteren vorteilhaften Ausgestaltung der Erfindung ist jeder Leitschaufelring in mindestens zwei, insbesondere gleich große, Ringsegmente eingeteilt.

In einer weiteren vorteilhaften Ausgestaltung der Erfindung ist jeder Laufschaufelring in mindestens vier, insbesondere gleich große, Ringsegmente eingeteilt ist.

Dies ist insbesondere vorteilhaft, da dadurch eine Phasenverschiebung der Strömung am Umfang erzeugt wird, so dass eine Schwingungsanregung sowohl der Leit- als auch der Laufschaufeln reduziert wird.

In einer vorteilhaften Ausgestaltung der Erfindung sind die Abstände zwischen den Schaufeln des ersten Ringsegments gleich und/oder die Abstände zwischen den Schaufeln des zweiten Ringsegments gleich. Dies ist insbesondere vorteilhaft, da beispielsweise bei zweigeteilten Gehäusen (split cases), insbesondere bei industriellen Gasturbinen oder Kompressoren in verfahrenstechnischen Anlagen, das erste Ringsegment in der oberen Gehäusehälfte angeordnet ist und das zweite Ringsegment in der unteren Gehäusehälfte angeordnet ist. Damit können vor allem Leitschaufelringsegmente an einem Gitter mit unterschiedlichen Schaufelanzahl versehen werden. Das obere Ringsegment weist beispielsweise X Schaufeln auf und das untere Ringsegment weist beispielsweise X+a Schaufeln auf, wobei folgendes gilt: a ≠ 0 und X > 2.

Die weiteren Ringsegmente können insbesondere gleich groß sein. Es ist anzumerken, dass die Schaufelringe sowohl Leit- als auch Laufschaufelringe sein können. Ferner kann der weitere Schaufelring für Laufschaufeln in mindestens vier, insbesondere gleich große, weitere Ringsegmente eingeteilt sein.

In einer weiteren vorteilhaften Ausgestaltung der Erfindung ist die Winkelpositionierung des ersten Ringsegments auf dem Schaufelring identisch zur Winkelpositionierung des zweiten weiteren Ringsegments auf dem weiteren Schaufelring.
Dies ist insbesondere vorteilhaft, dass über die Verdichterstufen hinweg, mindestens eine weitere Phasenverschiebung der Strömung am Umfang eingebracht werden kann.

In einer weiteren vorteilhaften Ausgestaltung der Erfindung ist die Winkelpositionierung des zweiten Ringsegments auf dem Schaufelring identisch zur Winkelpositionierung des ersten weiteren Ringsegments auf dem weiteren Schaufelring. Dies ist insbesondere vorteilhaft, dass über die Verdichterstufen hinweg, mindestens eine weitere Phasenverschiebung der Strömung am Umfang eingebracht werden kann ohne die Schaufelanzahl des entsprechenden Gitters verändern zu müssen.

In einer weiteren vorteilhaften Ausgestaltung der Erfindung sind die beiden Schaufelringe zueinander verdreh gesichert. Handelt es sich bei den Schaufelringen um Laufschaufelringe, so sind diese über die Hauptwelle der Strömungsmaschine miteinander verbunden. Handelt es sich bei den Schaufelringen um Leitschaufelringe, so sind diese über das Gehäuse der Strömungsmaschine miteinander verbunden.

Weitere Vorteilhafte Ausgestaltung der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- Figur 1: einen Längsschnitt durch einen Verdichter
- Figur 2: eine Abwickelung von zwei Stufen des obigen Verdichters

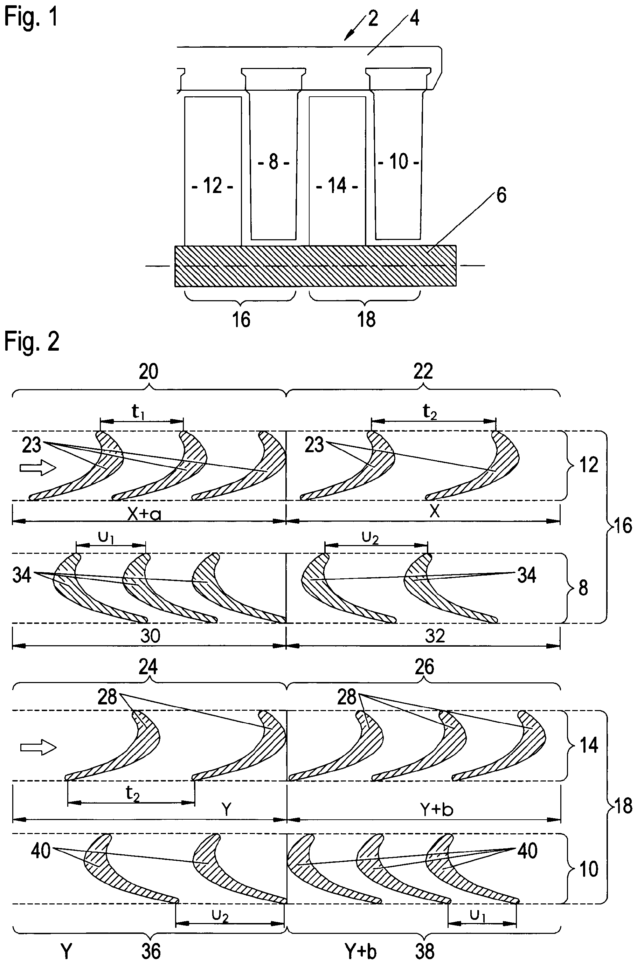

In Figur 1 ist ein Längsschnitt durch einen Verdichter 2 zu sehen. Im oberen Bereich verläuft horizontal ein Gehäuse 4 und unteren Bereich verläuft die Hauptwelle 6. Am Gehäuse 4 sind der erste Leitschaufelring 8 und der zweite Leitschaufelring 10 befestigt, dabei ist jeweils nur eine der Leitschaufeln sichtbar, die hier in der Figur 1 vertikal verläuft. An der Hauptwelle 6 sind der erste Laufschaufelring 12 und zweite Laufschaufelring 14 befestigt, dabei ist jeweils nur eine der Laufschaufeln sichtbar, die hier in der Figur vertikal verläuft. Der erste Laufschaufelring 12 und der erste Leitschaufelring 8 bilden eine Verdichterstufe 16, hier beispielsweise die erste Verdichterstufe. Der zweite Laufschaufelring 14 und der zweite Leitschaufelring 10 bilden eine weitere Verdichterstufe 18, hier beispielsweise die zweite Verdichterstufe. Es wird angemerkt, dass die Verdichterstufen nicht unbedingt direkt nebeneinander angeordnet sein müssen, so dass zwischen den darstellten Verdichterstufen 16, 18 mindestens eine weitere Verdichterstufe vorhanden sein kann.

Die Figur 2 zeigt eine Draufsicht auf die Abwicklung der beiden Verdichterstufen 16, 18 aus Figur 1. Dabei wird die Mantelfläche aller vier Schaufelringe 8 bis 14 hier horizontal abgewickelt. In der ersten Zeile ist der erste Laufschaufelring 12, in der zweiten Zeile ist der erste Leitschaufelring 8, in der dritten Zeile ist der zweite Laufschaufelring 14 und in der vierte Zeile ist der zweite Leitschaufelring 10 abgebildet.

Der erste Laufschaufelring 12 ist hier vorzugsweise in zwei oder vier gleich große Ringsegmente 20 und 22 unterteilt. Ganz links ist mit dem Pfeil die Drehrichtung des Laufschaufelringes 12 angedeutet. Es können sich tatsächlich um trennbare Bauteile handeln, so dass ein Ringsegment vorzugsweise einen Umfang von 90° oder 180° abdeckt. Das erste Ringsegment 20 vom Laufschaufelring 12 umfasst eine erste Anzahl X+a an Laufschaufeln 23 und das zweite Ringsegment 22 vom Laufschaufelring 12 umfasst eine zweite Anzahl X an Laufschaufeln 23, wobei in der Figur 2 Folgendes gilt: X = 2 und a = 1. Es muss lediglich die folgenden Bedingungen erfüllt sein: X ≥ 2 und a > 0. Die Laufschaufeln 23 im ersten Ringsegment 20 weisen eine erste Teilung t₁ auf. Die Laufschaufeln 23 im zweiten Ringsegment 22 weisen eine zweite Teilung t₂ auf, wobei, wie aus der Figur 2 erkennbar ist, ist die zweite Teilung t₂ größer als die erste Teilung t₁. Es wird angemerkt, dass unter einer Teilung der Abstand zwischen zwei benachbarten Schaufeln zu verstehen ist. Hier in der Figur 2 ist der Abstand t₁, t₂; u₁; u₂ in Umfangsrichtung zwischen den beiden Vorderkante der Schaufeln gemeint. Ringsegmente mit gleicher Teilung sollten vorzugsweise wegen der Wuchtbarkeit gegenüber angeordnet sein.

Für den zweiten Laufschaufelring 14 gilt das Gleiche wie für den ersten Laufschaufelring 12. Der zweite Laufschaufelring 14 ist hier ebenfalls vorzugsweise in zwei gleich große Ringsegmente 24 und 26 unterteilt. Es können sich tatsächlich um zwei trennbare Bauteile handeln, so dass ein Ringsegment vorzugsweise einen Umfang von 180° abdeckt. Das erste Ringsegment 24 vom Laufschaufelring 14 umfasst die zweite Anzahl X an Laufschaufeln 28 und das zweite Ringsegment 26 vom Laufschaufelring 14 umfasst die erste Anzahl X + a an Laufschaufeln 24, wobei in der Figur 2 Folgendes gilt: X = 2 und a = 1. Es muss lediglich die folgenden Bedingungen erfüllt sein: X ≥ 2 und a > 0. Die Laufschaufeln 28 im ersten Ringsegment 24 weisen die zweite Teilung t₂ auf. Die Laufschaufeln 28 im zweiten Ringsegment 26 weisen die erste Teilung t₁ auf, wobei, wie aus der Figur 2 erkennbar ist, ist die zweite Teilung t₂ größer als die erste Teilung t₁. Somit ist der Laufschaufelring 12 der ersten Verdichterstufe 16 zum Laufschaufelring 14 der nächsten (hier zweiten) Verdichterstufe 18 umgekehrt gestaltet. Es ist nun denkbar, dass der Laufschaufelring der dritten Verdichterstufe (nicht dargestellt) die gleiche Laufschaufelverteilung des ersten Laufschaufelring 12 aufweist. Somit können die Laufschaufelringe der ungeraden Verdichterstufen die Schaufelkonfiguration des ersten Laufschaufelringes 12 aufweisen und die Laufschaufelringe der geraden Verdichterstufen die Schaufelkonfiguration des zweiten Laufschaufelringes 14 aufweisen. Da die Laufschaufelringe beispielsweise eines Hochdruckverdichters mit der Hauptwelle 6 verbunden sind, verändern sich nicht deren Position zueinander, so dass diese Laufschaufelringe immer eine von einer Stufe zur nächsten Stufe um 180° verdrehte Konfiguration aufweisen.

Der erste Leitschaufelring 8 ist hier vorzugsweise in zwei gleich große Ringsegmente 30 und 32 unterteilt. Da sich der Leitschaufelring 8 nicht dreht, ist links kein Pfeil eingezeichnet wie bei den Laufschaufelringen 12 und 14. Es können sich tatsächlich um zwei trennbare Bauteile handeln, so dass ein Ringsegment vorzugsweise einen Umfang von 180° abdeckt. Das erste Ringsegment 30 vom Leitschaufelring 8 umfasst eine erste Anzahl Y+b an Leitschaufeln 34 und das zweite Ringsegment 32 vom Leitschaufelring 8 umfasst eine zweite Anzahl Y an Leitschaufeln 34, wobei in der Figur 2 Folgendes gilt: Y = 2 und b = 1. Es muss lediglich die folgenden Bedingungen erfüllt sein: Y ≥ 2 und b > 0. Die Leitschaufeln 34 im ersten Ringsegment 30 weisen eine erste Teilung u₁ auf. Die Leitschaufeln 34 im zweiten Ringsegment 32 weisen eine zweite Teilung u₂ auf, wobei, wie aus der Figur 2 erkennbar ist, ist die zweite Teilung u₂ größer als die erste Teilung u₁.

Der zweite Leitschaufelring 10 ist hier ebenfalls vorzugsweise in zwei gleich große Ringsegmente 36 und 38 unterteilt. Es können sich tatsächlich um zwei trennbare Bauteile handeln, so dass ein Ringsegment vorzugsweise einen Umfang von 180° abdeckt. Das erste Ringsegment 36 vom zweiten Leitschaufelring 10 umfasst die zweite Anzahl Y an Leitschaufeln 40 und das zweite Ringsegment 38 vom zweiten Leitschaufelring 10 umfasst die erste Anzahl Y + b an Leitschaufeln 40, wobei in der Figur 2 Folgendes gilt: Y = 2 und b = 1. Es muss lediglich die folgenden Bedingungen erfüllt sein: Y ≥ 2 und b > 0. Die Leitschaufeln 40 im ersten Ringsegment 36 weisen die zweite Teilung u₂ auf. Die Leitschaufeln 40 im zweiten Ringsegment 38 weisen die erste Teilung u₁ auf, wobei, wie aus der Figur 2 erkennbar ist, ist die zweite Teilung u₂ größer als die erste Teilung u₁. Somit ist der Leitschaufelring 8 der ersten Verdichterstufe 16 zum Leitschaufelring 10 der nächsten (hier zweiten) Verdichterstufe 18 umgekehrt gestaltet. Es ist nun denkbar, dass der Leitschaufelring der dritten Verdichterstufe (nicht dargestellt) die gleiche Leitschaufelverteilung des ersten Leitschaufelring 8 aufweist. Somit können die Leitschaufelringe der ungeraden Verdichterstufen die Schaufelkonfiguration des ersten Leitschaufelringes 8 aufweisen und die Leitschaufelringe der geraden Verdichterstufen die Schaufelkonfiguration des zweiten Leitschaufelringes 10 aufweisen. Da die Leitschaufelringe beispielsweise eines Hochdruckverdichters mit dem Gehäuse 4 verbunden sind, verändern sich nicht deren Position zueinander, so dass diese Leitschaufelringe immer eine von einer Stufe zur nächsten Stufe um 180° verdrehte Konfiguration aufweisen.

Durch diese Schaufelkonfiguration können Schwingungen vermieden werden und damit können die entsprechenden Bauteil schlanker ausgelegt werden, so dass in der Strömungsmaschine einem solchen erfindungsgemäßen Verdichter Gewicht eingespart werden kann.

### Bezugszeichenliste

- 2: Verdichter
- 4: Gehäuse
- 6: Hauptwelle
- 8: erster Leitschaufelring
- 10: zweiter Leitschaufelring
- 12: erster Laufschaufelring
- 14: zweiter Laufschaufelring
- 16: erste Verdichterstufe
- 18: zweite Verdichterstufe
- 20: erstes Ringsegment von 12
- 22: zweites Ringsegment von 12
- 23: Schaufeln von 12
- 24: erstes Ringsegment von 14
- 26: zweites Ringsegment von 14
- 28: Schaufeln von 14
- 30: erstes Ringsegment von 8
- 32: zweites Ringsegment von 8
- 34: Schaufeln von 8
- 36: erstes Ringsegment von 10
- 38: zweites Ringsegment von 10
- 40: Schaufeln von 10
- X+a; Y+b: eine erste Anzahl an Schaufeln
- X; Y: eine zweite Anzahl an Schaufeln

## Patentansprüche

1. Verdichter mit
- mindestens einem Schaufelring (8; 10; 12; 14) einer ersten Verdichterstufe, der mindestens zwei Ringsegmente (20, 22; 30, 32) aufweist,
- Schaufeln, die derart in den Ringsegmenten (20, 22; 30, 32;) des Schaufelrings (8; 12) angeordnet sind, dass eine erste Anzahl (X+a; Y+b) an Schaufeln (23; 34) in einem ersten Ringsegment (20; 30) angeordnet sind und eine zweite Anzahl (X; Y) an Schaufeln (23; 34) in einem zweiten Ringsegment (22; 32) angeordnet sind,
**wobei**
die erste Anzahl (X+a; Y+b) an Schaufeln ungleich ist zur zweiten Anzahl (X; Y) an Schaufeln (23, 34); **gekennzeichnet durch**
- einen weiteren Schaufelring (10; 14) einer weiteren Verdichterstufe, mit mindestens zwei weiteren Ringsegmenten (24, 26; 36, 38), die weitere Schaufeln (28, 40) aufweisen,
wobei das zweite weitere Ringsegment (26; 38) die erste Anzahl (X + a; Y + b) an weiteren Schaufeln (28; 40) aufweist und das erste weitere Ringsegment (24; 36) die zweite Anzahl (X; Y) an weiteren Schaufeln (28; 40) aufweist, wobei der Schaufelring und der weitere Schaufelring zueinander verdrehgesichert eine um 180° verdrehte Konfiguration aufweisen und so zueinander umgekehrt gestaltet sind.

2. Verdichter nach Anspruch 1, **dadurch gekennzeichnet, dass** die Abstände (t₁; u₁) zwischen den Schaufeln des ersten Ringsegments (20; 30) gleich sind und/oder die Abstände (t₂; u₂) zwischen den Schaufeln des zweiten Ringsegments (22; 32) gleich sind.

3. Verdichter nach mindestens einem der Ansprüche 1 oder 2, **dadurch gekennzeichnet, dass** die Winkelpositionierung des ersten Ringsegments (20; 30) auf dem Schaufelring (12; 8) identisch ist zur Winkelpositionierung des zweiten weiteren Ringsegments (26; 38) auf dem weiteren Schaufelring (14; 10).

4. Verdichter nach mindestens einem der vorhergehenden Ansprüche, **dadurch gekennzeichnet, dass** die Winkelpositionierung des zweiten Ringsegments (22; 32) auf dem Schaufelring (12; 8) identisch ist zur Winkelpositionierung des ersten weiteren Ringsegments (24; 36) auf dem weiteren Schaufelring (14; 10).

5. Verdichter nach mindestens einem der vorherigen Ansprüche, **dadurch gekennzeichnet, dass** der Schaufelring (12; 8) nur zwei Ringsegmente (20, 22; 30, 32) und/oder der weitere Schaufelring (14; 10) nur zwei weitere Ringsegmente (24, 26; 36, 38) aufweisen.

6. Verdichter nach mindestens einem der vorherigen Ansprüche, **dadurch gekennzeichnet, dass** die Schaufeln und/oder die weiteren Schaufeln Laufschaufeln (23; 28) und/oder Leitschaufeln (34; 40) sind.

7. Verdichter nach mindestens einem der vorherigen Ansprüche, **dadurch gekennzeichnet, dass** jede Verdichterstufe einen Laufschaufelring (12, 14) und einen Leitschaufelring (8, 10) aufweist.

8. Verdichter nach Anspruch 7, **dadurch gekennzeichnet, dass** jeder Leitschaufelring (8, 10) in mindestens zwei, insbesondere gleich große, Ringsegmente (30, 32; 36, 38) eingeteilt ist.

9. Verdichter nach mindestens einem der Ansprüche 7 oder 8, **dadurch gekennzeichnet, dass** jeder Laufschaufelring (12, 14) in mindestens vier, insbesondere gleich große, Ringsegmente (20, 22; 24, 26) eingeteilt ist.

10. Strömungsmaschine mit einem Verdichter nach einem der obigen Ansprüche.

## Claims

1. A compressor having
- at least one blade ring (8; 10; 12; 14) of a first compressor stage, which comprises at least two ring segments (20, 22; 30, 32),
- blades which are arranged in the ring segments (20, 22; 30, 32) of the blade ring (8; 12) in such a manner that a first number (X + a; Y + b) are arranged on blades (23; 34) in a first ring segment (20; 30) and a second number (X; Y) are arranged on blades (23; 34) in a second ring segment (22; 32),
wherein
the first number (X + a; Y + b) of blades is unequal to the second number (X; Y) of blades (23, 34); **characterized by**
- a further blade ring (10; 14) of a further compressor stage, having at least two further ring segments (24, 26; 36, 38), which comprise further blades (28, 40),
wherein the second further ring segment (26; 38) comprises the first number (X + a; Y + b) on further blades (28; 40) and the first further ring segment (24; 36) comprises the second number (X; Y) of further blades (28; 40), wherein the blade ring and the further blade ring, non-rotatably locked relative to one another, have a configuration that is twisted by 180° and are thus configured inversely relative to one another.

2. The compressor according to Claim 1, **characterized in that** the distances (t₁; u₁;) between the blades of the first ring segment (20; 30) are equal and/or the distances (t₂; u₂) between the blades of the second ring segment (22; 32) are equal.

3. The compressor according to at least one of the Claims 1 or 2, **characterized in that** the angular positioning of the first ring segment (20; 30) on the blade ring (12; 8) is identical to the angular positioning of the second further ring segment (26; 38) on the further blade ring (14; 10).

4. The compressor according to at least one of the preceding claims, **characterized in that** the angular positioning of the second ring segment (22; 32) on the blade ring (12; 8) is identical to the angular positioning of the first further ring segment (24; 36) on the further blade ring (14; 10).

5. The compressor according to any one of the preceding claims, **characterized in that** the blade ring (12; 8) has only two ring segments (20, 22; 30, 32) and/or the further blade ring (14; 10) has only two further ring segments (24, 26; 36, 38).

6. The compressor according to at least one of the preceding claims, **characterized in that** the blades and/or the further blades are moving blades (23; 28) and/or guide blades (34; 40).

7. The compressor according to at least one of the preceding claims, **characterized in that** each compressor stage comprises a moving blade ring (12, 14) and a guide blade ring (8, 10).

8. The compressor according to Claim 7, **characterized in that** each guide blade ring (8, 10) is divided into at least two ring segments (30, 32; 36, 38) which are in particular identical in size.

9. The compressor according to at least one of the Claims 7 or 8, **characterized in that** each moving blade ring (12, 14) is divided into at least four ring segments (20, 22; 24, 26) which are in particular identical in size.

10. A turbomachine having a compressor according to any one of the above claims.

## Revendications

1. Compresseur comportant
- au moins un anneau d'aubage (8 ;10 ;12 ;14) d'un premier étage de compresseur, qui présente au moins deux segments annulaires (20,22 ;30,32),
- des aubes, qui sont disposées de telle sorte que dans les segments annulaires (20,22 ;30,32) de l'anneau d'aubage (8 ;12) un premier nombre (X+a ; Y+b) d'aubes (23 ;24) soit disposé dans un premier segment annulaire (20 ;30) et un second nombre (X ;Y) d'aubes (23 ;24) soit disposé dans un deuxième segment annulaire (22 ;32), dans lequel
le premier nombre (X+a ; Y+b) d'aubes est inégal par rapport au deuxième nombre (X ;Y) d'aubes (23,34), **caractérisé par**
- un deuxième anneau d'aubage (10 ;14) d'un étage de compresseur supplémentaire, comportant au moins deux segments annulaires supplémentaires (24,26 ;36,38), qui présentent des aubes supplémentaires (28,40),
dans lequel le deuxième segment annulaire supplémentaire (26 ;38) présente le premier nombre(X+a ; Y+b) d'aubes supplémentaires (28 ;40) et le premier segment annulaire supplémentaire (24 ;36) présente le deuxième nombre (X ;Y) d'aubes supplémentaires (28 ;40), dans lequel l'anneau d'aubage et l'anneau d'aubage supplémentaire présentent une configuration tournée à 180° de manière sécurisée en torsion et sont configurés à l'inverse l'un par rapport à l'autre.

2. Compresseur selon la revendication 1, **caractérisé en ce que** les écarts (t₁ ; u₁) entre les aubes du premier segment annulaire (20 ;30) et/ou les écarts (t₂ ;u₂) entre les aubes du deuxième segment annulaire (22 ;32) sont identiques.

3. Compresseur selon au moins une des revendications 1 ou 2, **caractérisé en ce que** le positionnement angulaire du premier segment annulaire (20 ;30) sur l'anneau d'aubage (12 ;8) est identique au positionnement angulaire du deuxième segment annulaire supplémentaire (26 ;38) sur l'anneau d'aubage supplémentaire (14 ;10).

4. Compresseur selon au moins une des revendications précédentes, **caractérisé en ce que** le positionnement angulaire du deuxième segment annulaire (22 ;32) sur l'anneau d'aubage (12 ;8) est identique au positionnement annulaire du deuxième segment annulaire supplémentaire (24 ;36) sur l'anneau d'aubage supplémentaire (14 ;10).

5. Compresseur selon au moins une des revendications précédentes, **caractérisé en ce que** l'anneau d'aubage (12 ;8) présente seulement deux segments annulaires (20,22 ;30,32) et/ou l'anneau d'aubage supplémentaire (14 ;10) présente seulement deux segments annulaires supplémentaires (24,26 ;36,38).

6. Compresseur selon au moins une des revendications précédentes, **caractérisé en ce que** les aubes et/ou les aubes supplémentaires sont des aubes mobiles (23 ;28) et/ou des aubes directrices (34 ;40).

7. Compresseur selon au moins une des revendications précédentes, **caractérisé en ce que** chaque étage de compresseur présente un anneau d'aube mobile (12 ;14) et un anneau d'aube directrice (8,10).

8. Compresseur selon la revendication 7, **caractérisée en ce que** chaque anneau d'aube directrice (8,10) est divisé en au moins deux segments annulaires, notamment de taille identique (30,32 ;36,38).

9. Compresseur selon au moins une des revendications 7 ou 8, **caractérisé en ce que** chaque anneau d'aube mobile (12 ;14) est divisé en au moins quatre segments annulaires, notamment de taille identique (20,22 ; 24, 26) .

10. Turbo machine comportant un compresseur selon une des revendications ci-dessus.
